# DEMANDE DE BREVET EUROPEEN

(11) **EP 0 532 084 A1**
(43) Date de publication de la demande: **17.03.1993**
(21) Numéro de dépôt: 92202629.9
(22) Date de dépôt: 31.08.1992
(51) Int. Cl.: C01B 13/32, C01B 13/18, H01C 7/02, H01G 4/12

(54) **Procédé pour la fabrication d'une poudre d'oxydes métalliques mixtes et utilisation de la poudre pour la fabrication de condensateurs et de résistances électriques**

(30) Priorité: 09.09.1991 BE 9100836
(71) Demandeur: SOLVAY (Société Anonyme), B-1050 Bruxelles (BE)
(72) Inventeur: Wautier, Henri, B-7090 Braine-Le-Comte (BE); Legrand, Franz, F-7390 Quaregnon (BE); van Cauwenbergh, Marianne, B-1851 Humbeek (BE)
(74) Mandataire: Decamps, Alain René François

(57) **Abrégé**

Procédé pour la fabrication d'une poudre d'oxydes métalliques mixtes selon lequel on mélange une solution alcoolique (A) fraîchement préparée d'acide oxalique et d'au moins un alcoolate métallique avec une solution (B) d'au moins un dérivé d'au moins un autre métal, puis on évapore l'alcool pour recueillir le précipité formé que l'on sèche et soumet à calcination dans un four.

Utilisation du procédé pour la fabrication d'une poudre pour la fabrication de condensateurs et de résistances électriques à coefficient de température positif (résistances PTC).

## Description

L'invention concerne un procédé pour la fabrication de poudres d'oxydes métalliques mixtes et son utilisation pour l'obtention d'une poudre destinée à la fabrication de condensateurs et de résistances électriques.

On connaît (demande de brevet non examinée JP-A-64/3019 au nom de NIPPON CEMENT Co) un procédé pour la production de fines particules de céramiques de structure tétragonale du type perovskite consistant à mélanger une solution alcoolique d'un alcoolate de titane et d'acide oxalique avec une solution aqueuse d'acide acétique contenant des acétates d'autres métaux. Ce procédé connu présente cependant l'inconvénient d'une complexité élevée à cause de l'utilisation de plusieurs solvants différents. Par ailleurs, il donne lieu à des poudres de granulométrie relativement étendue contenant une proportion importante de particules de gros diamètre supérieur à 1 µm. De plus, la solution alcoolique d'acide oxalique et d'alcoolate de titane n'est pas stable et se trouble rapidement suite à la précipitation d'oxalate de titane.

Dans la demande de brevet français FR-A-2617151 (SOLVAY & Cie), on décrit aussi un procédé pour la fabrication d'une poudre d'oxydes métalliques mixtes selon lequel on hydrolyse un alcoolate métallique en présence d'oxyde(s) ou d'hydroxyde(s) métallique(s) et d'un acide organique carboxylique contenant plus de 6 atomes de carbone.

L'invention vise à remédier aux inconvénients des procédés connus en fournissant un procédé nouveau qui permet d'obtenir, économiquement et simplement, des cristaux de taille submicronique non agglomérés d'oxydes métalliques mixtes de granulométrie régulière.

L'invention concerne dès lors un procédé pour la fabrication d'une poudre d'oxydes métalliques mixtes selon lequel on mélange une solution alcoolique (A) d'acide oxalique et d'au moins un alcoolate métallique avec une solution (B) d'au moins un dérivé d'au moins un métal différent de celui de la solution (A), puis on évapore l'alcool pour recueillir le précipité formé que l'on sèche et l'on soumet à calcination. Selon l'invention :
a) la solution (A) est préparée au moment de son emploi par addition d'une solution alcoolique (C) d'acide oxalique à une solution alcoolique (D) de l'alcoolate métallique et
b) la solution (B) est une solution dans un alcool d'au moins un hydroxyde ou acétate du métal différent de celui de la solution (A).

Par poudre d'oxydes métalliques mixtes, on entend désigner une poudre comprenant des oxydes contenant au moins deux métaux différents.

Selon l'invention, l'alcoolate métallique est un composé de formule

R-O-Me

, dans laquelle Me est un atome de métal et où R désigne un groupement hydrocarboné aromatique, alicyclique ou aliphatique linéaire ou ramifié, saturé ou comportant une ou plusieurs insaturations, non substitué ou portant un ou plusieurs substituants hydrocarbonés comportant éventuellement un ou plusieurs hétéroatomes dans leur chaîne principale. Les alcoolates métalliques dérivés d'un alcool aliphatique linéaire saturé, éventuellement substitué, sont préférés tels que, par exemple, les alcoolates dérivés d'un alcool aliphatique inférieur comportant moins de S atomes de carbone, comme ceux où R est un groupement méthyle, éthyle, n-propyle, isopropyle, n-butyle ou iso-butyle. On peut, de manière indifférente, utiliser un seul alcoolate métallique ou un mélange de plusieurs alcoolates.

L'acide oxalique est généralement mis en oeuvre sous sa forme cristallisée associant deux molécules d'eau à sa molécule.

Selon l'invention, la solution (A) est préparée au moment de son emploi par mélange d'une solution (C) d'acide oxalique dans un alcool à une solution alcoolique (D) d'au moins un alcoolate métallique. Les solvants des solutions (C) d'acide oxalique et (D) d'alcoolate métallique sont des alcools aliphatiques ou alicycliques éventuellement substitués ou un mélange de deux ou plusieurs de ces alcools miscibles l'un dans l'autre dans de larges proportions. Les alcools aliphatiques linéaires saturés dits "inférieurs", c'est-à-dire ceux comportant 1 à 6 atomes de carbone dans leur chaîne hydrocarbonée conviennent bien. Les alcools comportant de 1 à 4 atomes de carbone, tels que les alcools méthylique, éthylique, n-propylique, isopropylique, n-butylique et isobutylique conviennent le mieux. Parmi ces derniers, l'alcool méthylique a donné d'excellents résultats. L'alcool ou le mélange d'alcools utilisé comme solvant dans la solution (D) peut être différent de celui de la solution (C) d'acide oxalique et de celui de la solution (B). On peut également employer le même alcool ou le même mélange d'alcools pour deux des trois ou pour les trois solutions.

La concentration en acide oxalique de la solution (A) doit être choisie soigneusement en fonction des métaux mis en oeuvre. Habituellement, on utilise des solutions (A) qui contiennent plus de 0,1 mole d'acide oxalique par litre et, de préférence, plus de 0,2 mole par titre. De même, on utilise généralement des solutions (A) qui contiennent moins de 2,5 moles d'acide oxalique par litre et, de préférence, moins de 1,2 modes par titre. La concentration de 0,5 mole d'acide oxalique par litre a donné d'excellents résultats. La quantité totale d'acide oxalique à mettre en oeuvre doit être suffisante pour assurer une précipitation complète, à l'état d'oxalates métalliques mixtes, de tous les métaux présents dans le milieu réactionnel. En pratique, on recommande de régler la quantité d'acide oxalique de façon à mettre en oeuvre un nombre de moles total d'acide oxalique qui soit supérieur à 0,8 fois le nombre de notes total de tous les dérivés de métaux présents dans la solution (A) et, de préférence, supérieur à 0,9 fois ce nombre de moles. De même, il est recommandé de mettre en oeuvre une quantité molaire d'acide oxalique inférieure à 2 fois le nombre total de moles de tous les dérivés de métaux présents dans la solution (A) et, de préférence, inférieure à 1,6 fois ce nombre de moles.

Dans le procédé selon l'invention, la solution (B) est une solution d'au moins un hydroxyde ou acétate d'au moins un métal différent de celui de la solution (A) dans un alcool ou un mélange d'alcools. Les alcools utilisés comme solvant dans la solution (B) sont analogues à ceux des solutions (C) et (D). La description de ces alcools donnée plus haut à propos des solutions (C) et (D) s'applique par conséquent ici également pour la solution (B). Dans la solution (B), les hydroxydes ou les acétates de métaux peuvent être mis en oeuvre sous leur forme cristatlisée avec une ou plusieurs molécules d'eau.

Dans un mode opératoire particulier de l'invention, qui est préféré pour des raisons de simplicité de l'appareillage, notamment celui destiné à la récupération des solvants, les solvants des solutions (C) et (B) sont choisis identiques. Avantageusement, on sélectionnera les alcools parmi ceux appartenant à la famille des alcools aliphatiques inférieurs. Le méthanol, l'éthanol ou l'isopropanol conviennent particulièrement bien. Le méthanol a donné d'excellents résultats.

La calcination du précipité d'oxalate mixte des divers métaux a pour fonction de provoquer la pyrolyse de l'anion oxalate en anhydride carbonique gazeux qui s'échappe du four et d'obtenir de cette façon une poudre d'oxydes métalliques mixtes qui se présentent sous la forme de particules submicroniques non agglomérées. Le séchage du précipité d'oxalate mixte ainsi que sa calcination subséquente peuvent se faire avantageusement en une étape unique dans un four dont on élève progressivement la température. La température maximum de calcination dépend du type d'oxydes fabriqué et doit simplement être suffisante pour provoquer la pyrolyse des anions oxalate et la transformation des oxydes mixtes obtenus en une variété allotropique cristallisée. Elle doit en outre rester inférieure à la température de début de fusion des oxydes mixtes. Elle est par ailleurs généralement supérieure à 400 °C. Une température maximum de calcination de l'ordre de 600 à 900 °C a donné d'excellents résultats. Cette température maximum doit être maintenue dans le four pendant un temps suffisant pour que la pyrolyse des anions oxalate et la cristallisation des oxydes soit complète. Des durées d'au moins 30 minutes et, de préférence, d'au moins 60 minutes conviennent bien. D'excellents résultats ont été obtenus avec une durée de 120 minutes.

Selon l'invention, il n'est pas nécessaire que l'atmosphère régnant dans le four durant la calcination contienne des réactifs particuliers. Elle peut, avantageusement, consister simplement en air ambiant.

Une variante préférée du procédé selon l'invention consiste à choisir le métal intervenant dans la solution (D) parmi ceux du groupe IVb du tableau périodique des éléments. Par tableau périodique des éléments, on entend se référer à celui qui est décrit dans le "Condensed Chemical Dictionary" 10th edition, Van Nostrand Reinhold Cy, New-York 1981, aux pages 788 et 789.

Selon cette variante de l'invention, la solution (D) peut en outre contenir en option, au moins un sel soluble du métal de la solution (B) en quantité molaire totale inférieure à 70 % de la quantité molaire totale du dérivé du métal du groupe IVb. De préférence, ce sel soluble sera choisi parmi les sels d'acides carboxyliques aliphatiques à chaîne courte tels que les formiates, les acétates, les propionates, les gluconates et les citrates. Les acétates ont donné d'excellents résultats. Dans le cas de certains métaux amphotères tels que le silicium, on préfère toutefois mettre en oeuvre un ester provenant de la réaction d'un acide de ce métal avec un alcool aliphatique inférieur comme, par exemple, le tétraorthosilicate d'éthyle ou de méthyle.

Dans une autre variante au procédé selon l'invention, qui est également préférée, on améliore, dans la solution (D), la solubilité de l'alcoolate métallique dans le solvant alcoolique en additionnant à la solution des anions acétate en quantité telle que leur concentration dans la solution (D) soit supérieure à 0,1 ion gramme par atome gramme de métal et, de préférence, supérieure à 0,2 ion gramme par atome gramme de métal. La quantité de ces anions acétate est avantageusement choisie inférieure à 1,5 ions gramme par atome gramme de métal et, de préférence inférieure à 1,3 ions gramme par atome gramme de métal. Ces anions acétate peuvent être mis en oeuvre indifféremment sous forme d'acide acétique ou encore sous forme d'acétate métallique.

La concentration en dérivés de métaux des solutions (B) et (D) n'est pas critique non plus. La concentration relative de chaque dérivé de métal par rapport à l'ensemble des dérivés de métaux présents devra être adaptée en fonction de la solubilité des divers dérivés de métaux dans l'alcool choisi comme solvant et en fonction aussi de la formulation visée pour l'oxyde mixte que l'on désire fabriquer. Les concentrations optimales des divers dérivés de métaux peuvent être trouvées facilement par une expérimentation de routine en laboratoire. Généralement, on met en oeuvre dans la solution (B) une teneur totale en dérivés de métaux supérieure à 0,1 atome gramme de métaux par litre et, de préférence, supérieure à 0,2 atome gramme par litre. De même, il est habituel de ne pas dépasser dans la solution (B) une teneur totale en dérivés de métaux de 1,5 atomes gramme de métaux par litre et, de préférence, 1,2 atomes gramme par litre.

Dans une autre variante du procédé selon l'invention, qui est aussi préférée, on sélectionne l'hydroxyde ou acétate métallique de la solution (B) parmi les hydroxydes ou acétates des métaux du groupe IIa du tableau périodique des éléments.

Conformément au procédé selon l'invention, la solution (B) peut aussi contenir un hydroxyde ou acétate d'au moins un métal appartenant à au moins un des groupes IVa, Va, IIb, IIIb et VIIb.

Le procédé selon l'invention est particulièrement bien adapté à la fabrication de poudres d'oxydes métalliques mixtes dans lesquelles le métal du groupe IVb est sélectionné parmi le titane et/ou le zirconium. De même, il convient bien pour fabriquer des poudres d'oxydes métalliques mixtes dans lesquelles le métal du groupe IIa est choisi parmi le baryum, le strontium, le calcium, le magnésium et leurs mélanges. Il est aussi bien adapté à la fabrication de poudres d'oxydes métalliques mixtes où les métaux des groupes IVa, Va, IIb, IIIb et VIIb sont choisis parmi le plomb, le silicium, l'antimoine, le bismuth, le zinc, le cadmiun, l'yttrium, le cérium, le manganèse et leurs mélanges. Les meilleurs résultats ont été obtenus pour la fabrication de poudres de titanate de baryum et de poudres d'oxydes métalliques mixtes comprenant du baryum en association avec un ou plusieurs métaux choisis parmi le plomb, le silicium, l'antimoine et le manganèse.

Le procédé selon l'invention présente l'avantage de produire des cristaux d'oxydes métalliques mixtes à l'état de poudres fines exemptes d'agglomérats, dont le diamètre moyen des particules est inférieur au micromètre. Les particules obtenues par le procédé selon l'invention présentent par ailleurs généralement un diamètre moyen supérieur à 0,05 µm.

L'invention a dès lors aussi pour objet l'utilisation du procédé pour la fabrication d'une composition pulvérulente submicronique exempte d'agglomérats et destinée à la fabrication de condensateurs et de résistances électriques, notamment celles de la catégorie dite à coefficient de température positif (résistances PTC). De telles compositions ont été décrites dans la demande de brevet BE-9001056 (SOLVAY & Cie).

Les exemples qui suivent sont donnés dans le but d'illustrer l'invention, sans pour autant en limiter sa portée. L'exemple 1R est donné à titre de comparaison. Les exemples 2 et 3 ont été réalisés conformément à l'invention.

### Exemple 1R : (non conforme à l'invention)

### Préparation d'une poudre de titanate de baryum

Dans un bécher, on a introduit 33,3 ml d'une solution d'hydroxyde de baryum monohydraté 0,502 M dans le méthanol préalablement filtrée pour éliminer la petite quantité de BaCO₃ insoluble formée avec le CO₂ de l'air ambiant.

On a ensuite ajouté lentement et sous agitation vigoureuse 5 ml d'isopropylate de titane pur. On a observé la formation d'un précipité blanc qui s'est progressivement redissout totalement sous l'influence de l'agitation.

On a enfin ajouté 25 ml d'une solution d'acide oxalique 1M dans le méthanol. On a observé la formation d'un gel. Après séchage sous vide et calcination à 850 °C pendant 2 heures, la poudre que l'on a obtenue était fortement agglomérée.

### Exemple 2 : (conforme à l'invention)

### Préparation d'une poudre de titanate de baryum

Dans un bécher, on a successivement introduit :
27 ml d'une solution d'acide oxalique 1M dans le méthanol
et 36 ml d'une solution d'isopropylate de Ti 0,5 M dans le méthanol contenant aussi 0,7 mole d'acide acétique par mole de Ti.

On a ensuite mélangé vigoureusement au moyen d'un barreau magnétique puis on a introduit 25 ml d'une solution 0,72 M en hydroxyde de baryum monohydraté dans le méthanol ce qui a causé la précipitation rapide d'un oxalate mixte de Ba et de Ti.

Après avoir poursuivi l'agitation pendant 30 minutes, on a concentré et séché le précipité sous vide, puis on l'a calciné dans un four que l'on a porté progressivement depuis la température ambiante jusqu'à 850 °C avec une vitesse de montée en température de 100 °C/heure. On a maintenu la température de 850 °C pendant 2 heures, puis on a laissé refroidir la poudre d'oxyde mixte de BaTiO₃ obtenue.

On a procédé à un examen de la poudre consistant à déterminer la teneur en BaO libre au moyen d'une attaque par une solution aqueuse diluée (environ 0,1 N) d'HCl mis en excès et titré en retour au moyen d'une solution aqueuse de NaOH. La teneur en BaO libre mesurée dans la poudre obtenue a été inférieure à 2 % et a donc confirmé la présence de BaTiO₃ cristallisé qui ne réagit pas avec HCl.

La poudre obtenue a présenté un diamètre moyen de 0,7 µm mesuré au granulomètre de marque MALVERN Mastersizer et était exempte d'agglomérats.

### Exemple 3 : (conforme à l'invention)

### Préparation d'une poudre pour résistance PTC

Dans un bécher, on a successivement introduit :
16,02 ml d'une solution 0,021 M en acétate de calcium monohydraté dans le méthanol,
53,14 ml d'une solution 0,081 M en acétate de plomb trihydraté dans le méthanol,
2,01 ml d'une solution 0,020 M en acétate d'antimoine monohydraté dans le méthanol,
0,81 ml d'une solution 0,010 M en acétate de manganèse monohydraté dans le méthanol,
0,67 ml d'une solution 0,100 M en tétraorthosilicate d'éthyle dans le méthanol,
et 4 ml d'isopropylate de titane pur.

On a ensuite introduit, sous forte agitation réalisée au moyen d'un barreau magnétique, 40 ml d'une solution 0,500 M fraîchement préparée en acide oxalique dihydraté dans le méthanol,
puis 17,3 ml d'une solution 0,504 M en hydroxyde de baryum monohydraté dans le méthanol.

On a poursuivi l'agitation pendant 30 minutes pendant que le précipité s'est formé, puis on a concentré et séché le précipité par chauffage sous vide.

Après séchage du précipité, on l'a calciné dans un four sous air sec jusqu'à une température de 750 °C que l'on a maintenue pendant 2 heures. La vitesse de montée du four en température a été de 100 °C/heure.

Après refroidissement à température ambiante, on a recueilli une poudre non agglomérée d'oxydes métalliques mixtes de diamètre moyen de 0,7 un mesuré au granulomètre de marque MALVERN Mastersizer et dont la teneur en BaO libre a été inférieure à 2 %.

La composition obtenue convient pour la fabrication de résistances PTC et répondait à la formule suivante :

Ba₀_{,}₆₅ Ca₀_{,}₀₂₅ Pb₀_{,}₃₂ Ti₁_{,}₀ Sb₀_{,}₀₀₃ Mn₀_{,}₀₀₀₆ Si₀_{,}₀₀₅ O₃_{,}₀₁₁

## Revendications

1. Procédé pour la fabrication d'une poudre d'oxydes métalliques mixtes selon lequel on mélange une solution alcoolique (A) d'acide oxalique et d'au moins un alcoolate métallique avec une solution (B) d'au moins un dérivé d'au moins un métal différent de celui de la solution (A), puis on évapore l'alcool pour recueillir le précipité formé que l'on sèche et l'on soumet à calcination, caractérisé en ce que :
a) la solution (A) est préparée au moment de son emploi par addition d'une solution alcoolique (C) d'acide oxalique à une solution alcoolique (D) de l'alcoolate métallique et
b) la solution (B) est une solution dans un alcool d'au moins un hydroxyde ou acétate du métal différent de celui de la solution (A).

2. Procédé selon la revendication 1, caractérisé en ce que le métal de l'alcoolate métallique de la solution (D) appartient au groupe IVb du tableau périodique des éléments.

3. Procédé selon la revendication 1 ou 2, caractérisé en ce que le métal de l'hydroxyde ou acétate métallique de la solution (B) appartient au groupe IIa du tableau périodique des éléments.

4. Procédé selon l'une quelconque des revendications 1 à 3, caractérisé en ce que la solution (B) contient aussi au moins un hydroxyde ou acétate d'au moins un métal appartenant à au moins un des groupes IVa, Va, IIb, IIIb et VIIb.

5. Procédé selon l'une quelconque des revendications 1 à 4, caractérisé en ce que l'alcool choisi comme solvant pour la solution (B) est un alcool aliphatique inférieur identique à celui du solvant de la solution (C).

6. Procédé selon l'une quelconque des revendications 1 à 5, caractérisé en ce que l'alcool utilisé comme solvant pour les solutions (C) et (B) est choisi parmi le méthanol, l'éthanol et l'isopropanol.

7. Procédé selon l'une quelconque des revendications 2 à 6, caractérisé en ce que la solution (D) utilisée pour préparer la solution (A) contient en outre au moins un sel soluble du métal de la solution (B) en quantité molaire totale inférieure à 70 % de la quantité molaire totale du dérivé de métal du groupe IVb.

8. Procédé selon l'une quelconque des revendications 1 à 7, caractérisé en ce que la solution (D) utilisée pour préparer la solution (A) contient en outre des ions acétate en concentration comprise entre 0,2 et 1,5 ion(s) gramme par atome gramme de métaux.

9. Procédé selon l'une quelconque des revendications 2 à 8, caractérisé en ce que le métal appartenant au groupe IVb est le titane et/ou le zirconium.

10. Procédé selon l'une quelconque des revendications 3 à 9, caractérisé en ce que le métal du groupe IIa est sélectionné parmi le baryum, le strontium, le calcium et le magnésium et leurs mélanges.

11. Procédé selon la revendication 7, caractérisé en ce que le sel soluble de métal est sélectionné parmi les sels de plomb, de silicium, d'antimoine et de manganèse et leurs mélanges.

12. Procédé selon l'une quelconque des revendications 1 à 11, caractérisé en ce que la solution (A) contient de 0,1 à 2,5 mole(s) d'acide oxalique par litre et la solution (B) contient de 0,1 à 1,5 atome(s) gramme de métaux par litre.

13. Procédé selon l'une quelconque des revendications 1 à 12, caractérisé en ce que le four utilisé pour calciner le précipité est rempli d'une atmosphère gazeuse constituée exclusivement d'air.

14. Utilisation du procédé selon l'une quelconque des revendications 1 à 13 pour l'obtention d'une composition pulvérulente submicronique destinée à la fabrication de condensateurs et de résistances électriques à coefficient de température positif (résistances PTC).
